(19)

Europäisches
Patentamt
European
Patent Office
Office européen
des brevets

(11) **EP 3 929 619 A1**

(12) **EUROPEAN PATENT APPLICATION**

(43) Date of publication:
**29.12.2021 Bulletin 2021/52**

(21) Application number: **20181390.4**

(22) Date of filing: **22.06.2020**

(51) Int Cl.:
**G01S 7/497** (2006.01)    **G01S 17/42** (2006.01)
**G01S 17/931** (2020.01)    **G01C 25/00** (2006.01)
**H04N 17/00** (2006.01)    **G01S 13/931** (2020.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Mahle International GmbH**
**70376 Stuttgart (DE)**

(72) Inventor: **CANTADORI, Andrea**
**70376 STUTTGART (DE)**

(74) Representative: **Dondi, Silvia**
**Bugnion S.p.A.**
**Largo Michele Novaro, 1/A**
**43121 Parma (IT)**

(54) **A METHOD OF CALIBRATION OF A FRONT OPTICAL SENSOR MOUNTED ON BOARD OF A VEHICLE**

(57)    Method of calibration of a front optical sensor mounted on board of a vehicle, comprising the steps of:
- positioning the vehicle on a supporting surface (2) with a screen (3) arranged in front of it and inclined with respect to the supporting surface (2);
- for a right and left side of the vehicle:
• detecting the the distance ($D_{FR}$; $D_{FL}$) of a front wheel ($w_{FR}$; $w_{FL}$) and the distance ($D_{BR}$; $D_{BL}$) of a rear wheel ($w_{BR}$; $w_{BL}$) of the vehicle from a plane where the screen (3) lies;
• detecting the elevation ($H_{FR}$; $H_{FL}$) of the front wheel

($w_{FR}$; $w_{FL}$) and the elevation ($H_{BR}$; $H_{BL}$) of the rear wheel ($w_{BR}$; $w_{BL}$) with respect to the plane where the screen (3) lies;
• compute an angle ($b_R$; $b_L$) that is representative of the inclination of the screen (3) with respect to the supporting surface (3) based on the detected distances ($D_{FR}$, $D_{BR}$; $D_{FL}$, $D_{BL}$) and the elevations ($H_{FR}$, $H_{BR}$; $H_{FL}$, $H_{BL}$);

- adjusting an image or video based o the angle ($b_R$; $b_L$) before projecting it on the screen (3).

FIG. 1

**Description**

The present invention relates to a method of calibration of a front optical sensor mounted on board of a vehicle.

As it is known, ADAS is the acronym for Advanced Driver Assistance Systems, that are electronic driving assistance systems for vehicles that support the driver for the purpose of increasing safety and/or driving comfort.

At technological level, ADAS systems are based on a plurality of sensors (cameras, radar, Lidar, etc.) able to detect different information that are used as input data for a smart algorithm that oversees the degree of autonomy of the vehicle.

These sensors need to be calibrated directly by the manufactured before the vehicle is placed on the market.

Among the several calibration methods available nowadays, the Applicant has recently developed its own method of calibration of an optical sensor, like the front camera, or of a radar mounted on board of a vehicle. This method is disclosed in EP3588001 and US 2019/0392610.

This calibration method can also be used in the event of a vehicle placed on an inclined please. In fact, it is sufficient to suitably deform or adapt the image or the video to be projected onto the screen instead of performing the spatial adjustment of the screen with respect to the vehicle.

Still an issue of this solution is the essential requirement that the screen is orthogonal to the plane supporting the vehicle.

Nevertheless, this requirement is often not met in practice. Indeed, the calibration of the front camera is usually carried out in an area commonly available in a garage, without a level floor specifically dedicated to such operations. Garage floors are often inclined for an easier drainage of water and other liquids, or their surface may be uneven.

In this context, an object of the present invention is to propose a method of calibration of a front optical sensor mounted on board of a vehicle, which outweigh the drawbacks of the prior art mentioned above.

In particular, an object of the present invention is to propose a method of calibration of a front optical sensor mounted on board of a vehicle, that is reliable even in case the screen is not orthogonal to the plane supporting the vehicle.

The stated technical task and specified objects are substantially achieved by a method of calibration of a front optical sensor mounted on board of a vehicle, comprising the steps of:

- positioning the vehicle on a supporting surface;
- arranging a screen in front of the vehicle placed on the supporting surface, the screen being elevated with respect to the supporting surface and lying on a plane that is inclined with respect to the supporting surface;
- for a right and left side of the vehicle:

  • detecting the distance of a front wheel of the vehicle and the distance of a rear wheel of the vehicle from the plane where the screen lies;
  • detecting the elevation of the front wheel and the elevation of the rear wheel with respect to the plane where the screen lies;
  • in response to the distances and the elevations detected for the front wheel and the rear wheel, computing an angle that is representative of the inclination of the screen with respect to the supporting surface, the angle being computed as a trigonometric function of the distances and the elevations;

- selecting in a memory an image or video associated with the front optical sensor and adapting the image or video for compensating the inclination expressed by the angle;
- projecting the adapted image or video on the screen.

Preferably, the screen is rectangular or square with four vertexes and the adaptation of the image or video is carried out for each vertex.

According to a preferred embodiment, the detecting step is carried out by laser meters mounted on a support bearing the screen.

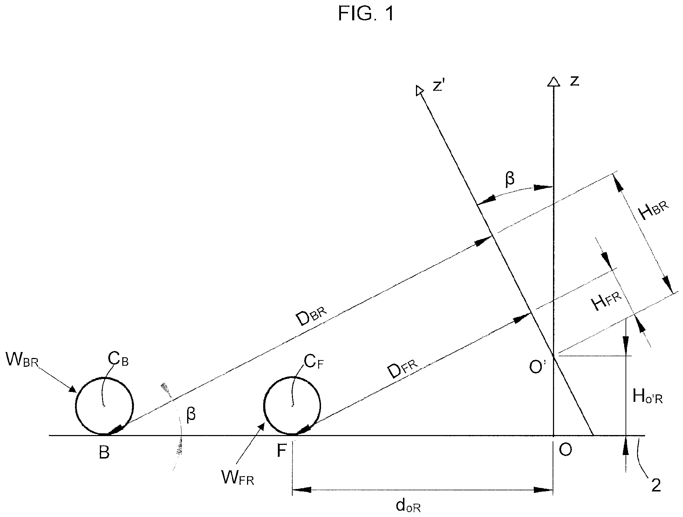

Further characteristics and advantages of the present invention will more fully emerge from the non-limiting description of a preferred but not exclusive embodiment of a method of calibration of a front optical sensor mounted on board of a vehicle, as depicted in figure 1, that schematically illustrates the geometrical relationships involved.

A front right wheel $w_{FR}$ and a rear right wheel $w_{BR}$ of a vehicle are illustrated. The vehicle is preferably a motor vehicle such as a car, a bus, a lorry, a road tractor, a tractor trailer, a farm machinery, a working vehicle, a self-propelled vehicle, etc.

An optical sensor to be calibrated is mounted on board of the vehicle, in the front part thereof. For example, the optical sensor is a CMOS or CCD type sensor of a camera or video camera installed on the vehicle.

The stationary vehicle is positioned on a supporting surface 2 in a test station according to techniques and with means of the known type.

The supporting surface 2 may be horizontal or inclined with respect to the theoretical horizontal plane, either forwards or backwards.

In front of the vehicle there is arranged a screen 3 so that the optical sensor can acquire images or videos projected onto the screen 3.

For example, the screen 3 may be the monitor of a television set or the monitor of a multimedia interactive whiteboard or a computer display.

The screen 3 is elevated with respect to the supporting surface 2 and lies on a plane that is inclined with respect the supporting surface 2.

The screen 3 is mounted on a support (not illustrated) that is preferably movable, i.e. by means of wheels, in order to adjust the position in front of the vehicle.

Figure 1 schematically illustrates the geometric relationship between the supporting surface 2, the screen 3 and some elements of the vehicle (i.e. the wheels of the right side).

Since figure 1 is a lateral view, taken from one side of the vehicle (for example right), the plane on which the screen 3 lies is represented by the axis identified as z'. The elevation of the screen 3 is indicated by point O'.

The axis z is the the ideal axis that is orthogonal to the supporting surface 2 and that passes by point O'. The axis Z intercepts the supporting surface 2 in a point indicated as O.

The method of calibration envisages to perform the following steps for the right side and for the left side of the vehicle.

For the sake of clarity, the following disclosure is relative to the right side, that means to the front right wheel $w_{FR}$ and to the rear right wheel $w_{BR}$.

$D_{FR}$ indicates the distance of the front right wheel $w_{FR}$ from the plane where the screen 2 lies (i.e. from the axis z'), whereas $D_{BR}$ indicates the distance of the rear right wheel $w_{BR}$ from the plane where the screen 3 lies (i.e. from the axis z').

$H_{FR}$ indicates the elevation of the front right wheel $w_{FR}$ with respect to the plane where the screen 3 lies.

$H_{BR}$ indicates the elevation of the rear right wheel $w_{BR}$ with respect to the plane where the screen 3 lies.

In practice, these elevations are indicated along the axis z' and starts from the point O'.

As it may be appreciated, everything is labelled with a final "R" in the subscript, that stands for "right".

The distance $D_{FR}$ and $D_{BR}$ are detected, as well as the elevations $H_{FR}$ and $H_{BR}$.

Preferably, the detection is carried out by laser meters (not illustrated) mounted on the same support of the screen 3.

In response to the distances $D_{FR}$, $D_{BR}$ and the elevations $H_{FR}$, $H_{BR}$ so detected, a computing step is performed in which it is computed an angle $b_R$ that is representative of the inclination of the screen 3 with respect to said supporting surface 2. The angle $b_R$ is computed as a trigonometric function of the distances $D_{FR}$, $D_{BR}$ and the elevations $H_{FR}$, $H_{BR}$.

In the embodiment described herewith, the angle is the one comprised between the direction z' on which the screen 3 lies and the direction z, that is calculated as:

$$\beta_R = \operatorname{atan} \frac{H_{BR} - H_{FR}}{D_{BR} - D_{FR}}$$

In particular, the elevations $H_{FR}$ of the front wheel $w_{FR}$ and the elevation $H_{BR}$ of the rear wheel $w_{BR}$ refer to the points of contact F, B of the corresponding wheel $w_{FR}$, $w_{BR}$ on the supporting surface 2, as indicated in figure 1.

From a practical point of view, it is easier to detect the heights taken from the rim centers $C_F$, $C_B$ and to compute the elevations $H_{FR}$, $H_{BR}$ using the radius of the wheels. The latter is preferably detected by a direct measure. Alternatively, the value of the radius declared by the wheel's manufacturer may be used.

$H_{O'R}$ indicates the elevation of the screen 3 from the supporting surface 2, where "R" indicates the reference to the right side of the vehicle.

While $H_{FR}$ and $H_{BR}$ are distances taken along the direction z', the elevation $H_{O'R}$ is the distance of the point O' from the supporting surface 2.

Thus, again using easy trigonometric computations, the elevation $H_{O'R}$ is expressed by:

$$H_{O'R} = D_{FR} \sin \beta_R - H_{FR} \cos \beta_R$$

The distance of the front right wheel $w_{FR}$ from the origin O is indicated as $d_{0R}$ and is computed as:

$$d_{0R} = D_{FR} \cos \beta_R + H_{FR} \sin \beta_R$$

As already said, this computation shall be performed also for the left side of the vehicle, that means for the front left wheel $w_{FL}$ and to the rear left wheel $w_{BL}$.

$D_{FL}$ indicates the distance of the front left wheel $w_{FL}$ from the plane where the screen 2 lies, whereas $D_{BL}$ indicates the distance of the rear left wheel $w_{BL}$ from the plane where the screen 3 lies.

$H_{FL}$ indicates the elevation of the front left wheel $w_{FL}$ with respect to the plane where the screen 3 lies.

$H_{BL}$ indicates the elevation of the rear left wheel $w_{BL}$ with respect to the plane where the screen 3 lies.

In this case, the angle is labelled as $b_L$, the distance $H_{O'L}$ is the distance of the point O' from the supporting surface 2 (left side) and $d_{0L}$ is the distance of the front left wheel $w_{FL}$ from the origin O.

The method proceeds with selecting from a memory an image or video associated with the front optical sensor and adapting the image or video for compensating the inclination expressed by the angle $b_R$.

Considering a rectangular or square screen 3, with four vertexes, the method requires to compute the adaptation for each vertex.

The adapted image or video is then projected on the screen 3.

In practice, the image or video is adjusted based on the angle $b_R$ before being projected on the screen 3.

Figure 1 illustrates a situation in which the supporting surface 2 is horizontal, whereas the screen 3 is inclined. Anyway, a dual situation may be envisaged in which the screen 3 is vertical, whereas the supporting surface 2 is inclined. The method may be applied to this dual situation as well.

The characteristics and the advantages of the method of calibration of a front optical sensor mounted on board of a vehicle, according to the present invention, are clear, as are the advantages.

In particular, by measuring the distances of each side (right and left) of the screen from the front and rear wheels (right and left) of the vehicle, it is possible to compute an angle that is representative of the inclination of the screen (real target) from the surface supporting the vehicle. Knowing this angle it is possible to adjust the projected image for compensating the mutual inclination of the screen and the supporting surface of the vehicle.

**Claims**

1. Method of calibration of a front optical sensor mounted on board of a vehicle, comprising the steps of:

   - positioning the vehicle on a supporting surface (2);
   - arranging a screen (3) in front of the vehicle placed on the supporting surface (2), said screen (3) being elevated with respect to said supporting surface (2) and lying on a plane that is inclined with respect to said supporting surface (2);
   - for a right and left side of the vehicle:

     • detecting the the distance ($D_{FR}$; $D_{FL}$) of a front wheel ($w_{FR}$; $w_{FL}$) of the vehicle and the distance ($D_{BR}$; $D_{BL}$) of a rear wheel ($w_{BR}$; $w_{BL}$) of the vehicle from the plane where the screen (3) lies;
     • detecting the elevation ($H_{FR}$; $H_{FL}$) of the front wheel ($w_{FR}$; $w_{FL}$) and the elevation ($H_{BR}$; $H_{BL}$) of the rear wheel ($w_{BR}$; $w_{BL}$) with respect to the plane where the screen (3) lies;
     • in response to the distances ($D_{FR}$, $D_{BR}$; $D_{FL}$, $D_{BL}$) and the elevations ($H_{FR}$, $H_{BR}$; $H_{FL}$, $H_{BL}$) detected for the front wheel ($w_{FR}$; $w_{FL}$) and the rear wheel ($w_{BR}$; $w_{BL}$), computing an angle ($b_R$; $b_L$) that is representative of the inclination of the screen (3) with respect to said supporting surface (3), said angle ($b_R$; $b_L$) being computed as a trigonometric function of said distances ($D_{FR}$, $D_{BR}$; $D_{FL}$, $D_{BL}$) and said elevations ($H_{FR}$, $H_{BR}$; $H_{FL}$, $H_{BL}$);

   - selecting in a memory an image or video associated with the front optical sensor and adapting said image or video for compensating the inclination expressed by said angle ($b_R$; $b_L$);
   - projecting the adapted image or video on said screen (3).

2. Method according to claim 1, wherein said angle ($b_R$; $b_L$) is computed as:

$$\beta_{R,L} = \operatorname{atan} \frac{H_{BR,BL} - H_{FR,FL}}{D_{BR,BL} - D_{FR,FL}}$$

3. Method according to any of the preceding claims, wherein said screen (3) is rectangular or square with four vertexes and the adaptation of the image or video is carried out for each vertex.

4. Method according to any of the preceding claims, wherein said detecting step is carried out by laser meters mounted on a support bearing said screen (3).

FIG. 1

Europäisches
Patentamt

European
Patent Office

Office européen
des brevets

# EUROPEAN SEARCH REPORT

**Application Number**

EP 20 18 1390

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/105018 A1 (CORGHI GIULIO [IT]) 2 April 2020 (2020-04-02) | 1-3 | INV. G01S7/497 |
| Y | * paragraphs [0001], [0051], [0099], [0100], [0109], [0115], [0116], [0125]; figures 4, 5 * ----- | 1-4 | G01S17/42 G01S17/931 G01C25/00 H04N17/00 |
| Y | DE 10 2017 203155 A1 (BOSCH GMBH ROBERT [DE]) 30 August 2018 (2018-08-30) * paragraphs [0031] - [0033], [0035], [0036], [0040] - [0042], [0046], [0047]; figures 2, 3 * ----- | 1-4 | ADD. G01S13/931 |

**TECHNICAL FIELDS SEARCHED (IPC)**

G01S
G01C
H04N
G06T
G01B

The present search report has been drawn up for all claims

| Place of search | Date of completion of the search | Examiner |
|---|---|---|
| Munich | 17 November 2020 | Ferrara, Michele |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    .................................................................................
& : member of the same patent family, corresponding
    document

EPO FORM 1503 03.82 (P04C01)

**EP 3 929 619 A1**

## ANNEX TO THE EUROPEAN SEARCH REPORT
## ON EUROPEAN PATENT APPLICATION NO.

EP 20 18 1390

This annex lists the patent family members relating to the patent documents cited in the above-mentioned European search report.
The members are as contained in the European Patent Office EDP file on
The European Patent Office is in no way liable for these particulars which are merely given for the purpose of information.

17-11-2020

| Patent document cited in search report | Publication date | Patent family member(s) | Publication date |
|---|---|---|---|
| US 2020105018 A1 | 02-04-2020 | CN 110967194 A<br>EP 3629053 A1<br>EP 3742192 A1<br>US 2020105018 A1 | 07-04-2020<br>01-04-2020<br>25-11-2020<br>02-04-2020 |
| DE 102017203155 A1 | 30-08-2018 | CN 110312910 A<br>DE 102017203155 A1<br>EP 3586080 A1<br>WO 2018153723 A1 | 08-10-2019<br>30-08-2018<br>01-01-2020<br>30-08-2018 |

EPO FORM P0459

For more details about this annex : see Official Journal of the European Patent Office, No. 12/82

**EP 3 929 619 A1**

**Patent documents cited in the description**

- EP 3588001 A
- US 20190392610 A